# FASCICULE DE BREVET EUROPEEN

(11) **EP 0 583 458 B1**
(45) Date de publication et mention de la délivrance du brevet: **24.04.1996**
(21) Numéro de dépôt: 93905411.0
(22) Date de dépôt: 19.02.1993
(51) Int. Cl.: A01F 29/00

(54) **DISPOSITIF DE DEMELAGE DE BALLES**
ENTWIRRVORRICHTUNG FÜR BALLEN
BALE BREAKING DEVICE

(30) Priorité: 27.02.1992 FR 9202289
(43) Date de publication de la demande: 23.02.1994
(73) Titulaire: S.A. AUDUREAU Société dite:, F-85260 L'Herbergement (Vendée) (FR)
(72) Inventeur: BONNAUDET, Jean-Claude, F-85260 L'Herbergement (FR)
(74) Mandataire: Fruchard, Guy
(86) Numéro de dépôt international: FR9300170
(87) Numéro de publication internationale: WO9316584

(56) Documents cités:
- WO-A-89/11786
- WO-A-91/05460
- AU-B- 500 597
- AU-B- 615 873
- DE-A- 3 614 234
- FR-A- 2 284 541
- FR-A- 2 636 204
- US-A- 3 972 484
- US-A- 4 083 501

## Description

La présente invention concerne un dispositif de démêlage de balles, en particulier des balles de paille ou de fourrage, que celles-ci soient cylindriques ou parallélépipèdiques.

On connaît de nombreux dispositifs de démêlage de balles. On connaît en particulier du document WO-A-89/11786 un dispositif de démêlage de balles comprenant un caisson, un organe porteur de balles disposé dans le caisson pour entraîner la balle selon une direction de déplacement de démêlage de la balle dans le caisson, un organe de démêlage disposé en aval de l'organe porteur par référence à la direction de déplacement de démêlage et associé à un organe d'entraînement en rotation, l'organe de démêlage comportant un tambour de démêlage monté pour tourner autour d'un axe s'étendant perpendiculairement à la direction de déplacement de démêlage et des dents s'étendant en saillie par rapport au tambour de démêlage, et un organe de débourrage de dents disposé en aval de l'organe de démêlage par référence à la direction de déplacement de démêlage et s'étendant partiellement entre les dents de l'organe de démêlage.

Dans ce document, l'organe de débourrage de dents comporte une série de disques de débourrage montés sur un axe commun et ayant un bord périphérique dentelé s'étendant dans des espaces entre des bandes déviatrices fixées au caisson. Le montage de cet organe de débourrage est relativement complexe puisqu'il est nécessaire de fixer les bandes entre les disques de débourrage après que ces disques de débourrage aient été mis en place. En outre, les disques de débourrage réalisent un porte à faux relativement important par rapport à l'axe les supportant de sorte que ces disques doivent être épais pour avoir une rigidité suffisante leur permettant de résister aux efforts auxquels ils sont soumis lors du débourrage, une épaisseur importante des disques entraînant à son tour une augmentation du poids de la machine. Enfin, si pour une raison quelconque l'un des disques de débourrage est détérioré, il n'est pas aisé de procéder au remplacement de celui-ci. Par ailleurs, les bandes déviatrices sont coudées pour entourer l'arbre porteur des disques de débourrage et doivent être fixées à la paroi du caisson à leurs extrémités supérieure et inférieure de sorte que cette contrainte limite la souplesse d'agencement du dispositif de démêlage à l'intérieur du caisson par rapport à des organes distributeurs du produit démêlé.

Selon l'invention on propose un dispositif de démêlage du type rappelé ci-dessus dans lequel l'organe de débourrage comporte un tambour de débourrage monté pour tourner autour d'un axe s'étendant parallèlement à l'axe de l'organe de démêlage, des anneaux de débourrage fixés au tambour perpendiculairement à son axe et ayant un bord extérieur dentelé s'étendant en saillie par rapport au tambour de débourrage, et une plaque de dégagement disposée en surplomb par rapport au tambour de débourrage et comportant des dents engagées entre les anneaux de débourrage jusqu'au voisinage du tambour de débourrage.

Ainsi, le tambour de débourrage équipé des anneaux de débourrage est réalisé complètement avant son montage dans le dispositif de démêlage et présente une structure très rigide permettant de le réaliser à partir d'éléments relativement légers. En outre, un espace important reste disponible en-dessous de la plaque de dégagement de sorte que cet espace peut être utilisé pour implanter un dispositif quelconque pour la distribution du produit démêlé.

D'autres caractéristiques et avantages de l'invention apparaîtront à la lecture de la description qui suit d'un mode de réalisation particulier non limitatif de l'invention en liaison avec les figures ci-jointes parmi lesquelles :

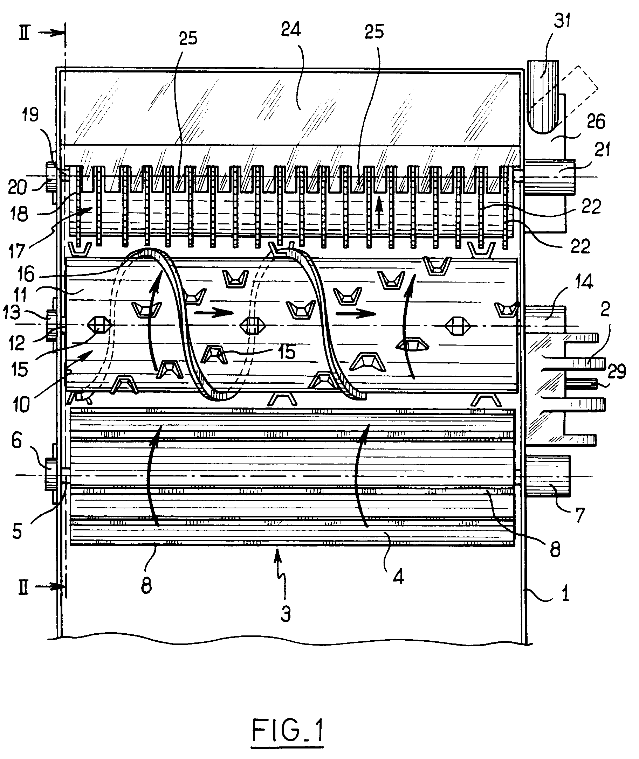

- la figure 1 est une vue schématique de dessus du dispositif de démêlage selon l'invention,
- la figure 2 est une vue en coupe selon la ligne II-II de la figure 1,
- la figure 3 est une vue en coupe partielle, agrandie selon la ligne III-III de la figure 2.

En référence aux figures, le dispositif de démêlage selon l'invention comporte un caisson 1 qui, dans le mode de réalisation illustré, est un caisson porté dont la paroi avant est équipée à cet effet d'un organe 2 de fixation à un tracteur. Un organe porteur généralement désigné en 3 est disposé dans le caisson perpendiculairement à la paroi avant. L'organe porteur comporte un tambour porteur 4 monté pour tourner autour d'un axe 5 ayant une extrémité monté pour tourner dans un palier 6 fixé sur la paroi arrière du caisson 1 et une extrémité opposée entraînée par un moteur réversible 7, par exemple un moteur hydraulique, fixé à la paroi avant du caisson. Le tambour 4 est équipé de barrettes 8 fixées au tambour porteur 4 selon une direction parallèle à son axe et formant des organes d'entraînement fixés au tambour porteur et s'étendant en saillie par rapport à celui-ci.

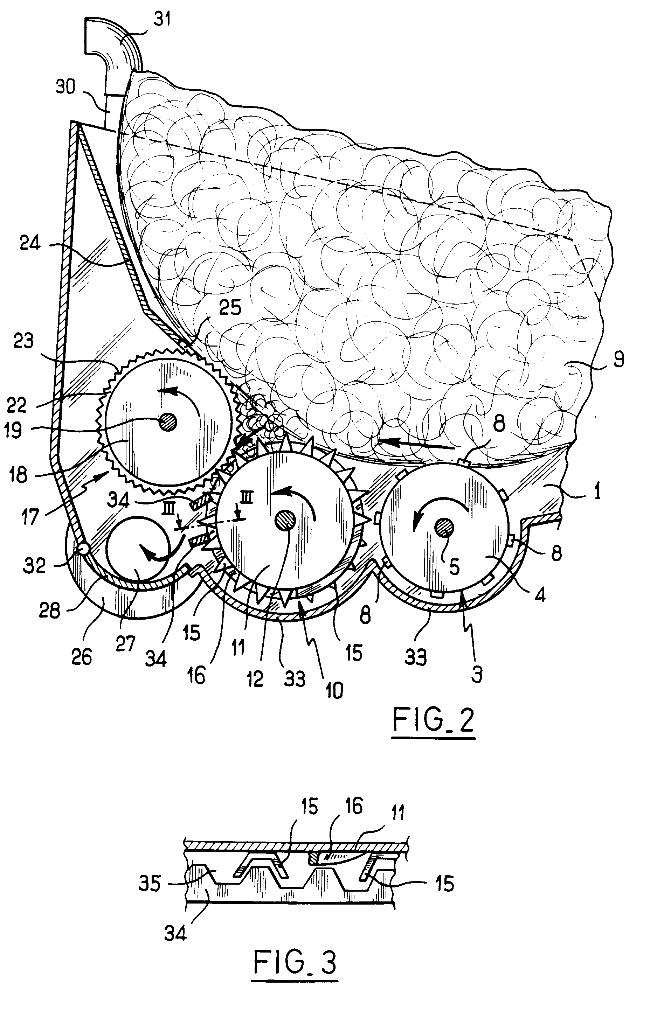

En utilisation normale, l'organe porteur 3 est entraîné en rotation dans le sens indiqué sur la figure 2 pour déplacer une balle 9 disposée dans le caisson selon une direction de déplacement de démêlage qui est perpendiculaire à l'axe 5 de l'organe porteur 3. Un organe de démêlage généralement désigné en 10 est disposé en aval de l'organe porteur 3 par référence à la direction de déplacement de démêlage.

L'organe de démêlage 10 comporte un tambour 11 également monté dans le caisson entre les parois avant et arrière pour tourner autour d'un axe 12 s'étendant parallèlement à l'axe 5 de l'organe porteur 3. L'axe 12 du tambour de démêlage 1O a une extrémité montée pour tourner dans un palier 13 porté par la paroi arrière du caisson et une extrémité opposée portée par un organe d'entraînement 14 fixé à la paroi avant du caisson. L'organe d'entraînement 14 est par exemple une transmission mécanique reliant l'axe 5 à un arbre cannelé 29 associé à l'organe de fixation 2 pour s'engager avec la prise de force du tracteur. Des dents de démêlage 15 sont fixées selon une disposition hélicoïdale sur le tambour de démêlage 11 et s'étendent en saillie par rapport au tambour de démêlage 11.

Dans le mode de réalisation particulier illustré, le tambour de démêlage 11 porte également une bande 16 fixée sur le tambour de démêlage 11 en saillie-par rapport à celui-ci et enroulée de façon hélicoïdale sur environ les deux tiers de la longueur du tambour de démêlage 11 à partir de son extrémité arrière, le sens d'enroulement de la bande 16 sur le tambour de démêlage 11 étant tel que lors d'une rotation du tambour de démêlage 11 dans la direction de déplacement de démêlage, la matière en contact avec la bande hélicoïdale 16 est entraînée vers la paroi avant du caisson. L'utilité de ce mouvement sera vue plus loin. La hauteur de la bande de démêlage 16 est inférieure à la hauteur des dents 15 pour une raison qui va apparaître ci-dessous.

Le dispositif de démêlage comporte enfin un organe de débourrage généralement désigné en 17. L'organe de débourrage 17 comporte un tambour de débourrage 18 monté pour tourner autour d'un axe 19 s'étendant parallèlement à l'axe de l'organe de démêlage 1O. L'axe 19 a son extrémité arrière montée pour tourner dans un palier 2O fixé à la paroi arrière du caisson 1 et une extrémité opposée entraînée en rotation par un moteur réversible 21 fixé à la paroi avant du caisson. Les moteurs hydrauliques 7 et 21 sont convenablement reliés à la centrale hydraulique du tracteur par des moyens non représentés. Des anneaux de débourrage 22 sont fixés au tambour de débourrage 18, par exemple par soudage, et s'étendent perpendiculairement à l'axe de rotation 19 du tambour de débourrage 18. Les anneaux de débourrage 22 ont un bord extérieur dentelé 23 qui s'étend en saillie par rapport au tambour de débourrage 18. L'organe de débourrage 17 est disposé en aval de l'organe de démêlage 10 par référence à la direction de déplacement de démêlage et est légèrement en surplomb de l'organe de démêlage, la distance entre l'axe de rotation 12 de l'organe de démêlage 1O et de l'axe de rotation 19 de l'organe de débourrage 17 étant telle que les anneaux de débourrage 22 s'étendent partiellement entre les dents 15 de l'organe de démêlage 10. Pour éviter un blocage du dispositif on remarquera que les anneaux de débourrage 22 qui sont en regard de la bande hélicoïdale 16 de l'organe de démêlage ont un diamètre extérieur légèrement inférieur aux autres anneaux afin de ne pas interférer avec la bande hélicoïdale 16 lors de la rotation de l'organe de démêlage 10 et de l'organe de débourrage 17.

Une plaque de dégagement 24 est fixée à la paroi latérale du caisson 1 en surplomb par rapport au tambour de débourrage 17. La plaque de dégagement 24 comporte des dents 25 engagées entre les anneaux de débourrage 22 jusqu'au voisinage de la surface externe du tambour de débourrage 17.

Dans le mode de réalisation particulier illustré, le dispositif comporte une turbine de distribution 26 qui est fixée à la paroi avant du caisson 1 et comporte un orifice d'entrée 27 tourné vers l'intérieur du caisson et associé à une auge d'alimentation 28 s'étendant en regard de l'orifice d'entrée 27 de la turbine 26 parallèlement à l'axe de l'organe de démêlage 10. L'auge 28 est disposée par rapport à l'organe de démêlage 10 pour recevoir le produit démêlé entraîné par l'organe de démêlage 10. La turbine 26 est entraînée d'une façon connue en soi, par exemple au moyen d'un mécanisme d'entraînement non représenté associé à l'arbre cannelé 29. La sortie de la turbine 26 est associée à un conduit 30 s'étendant verticalement et à l'extrémité duquel est montée une goulotte de distribution 31 pouvant être orientée selon différentes directions.

Dans le cas où l'on souhaite effectuer non seulement un démêlage de la balle mais également un hachage du produit la constituant, ce hachage est avantageusement réalisé en prévoyant au moins une contre-lame 34, deux dans le mode de réalisation illustré, disposée en regard des dents 15 de l'organe de démêlage 10 et comportant des échancrures 35 (voir figure 3) épousant le contour des dents 15 pour réaliser un cisaillement de la matière démêlée. Les contrelames 34 sont disposées en aval de l'organe de débourrage 17 en référence au sens de rotation de l'organe de démêlage et sont de préférence inclinées vers l'auge 28 afin de favoriser un écoulement du produit haché. Les contre-lames 34 peuvent être montées de façon amovibles en prévoyant des moyens de fixation appropriés non représentés sur les parois avant et arrière du caisson 1. Dans le mode de réalisation illustré, les contre-lames 34 peuvent être mises en place en accédant à leur emplacement par un pivotement de l'auge 28 autour d'un axe 32.

Lors d'une utilisation normale du dispositif de démêlage, l'organe porteur 3, l'organe de démêlage 1O et l'organe de débourrage 17 sont entraînés dans le même sens comme indiqué sur la figure 2 de sorte que la balle 9, ou tout au moins la partie de surface de cette balle en contact avec le dispositif de démêlage, est entraînée selon une direction de déplacement de démêlage. Du produit constituant la balle est prélevé par les dents de démêlage 15 et si la quantité de matière prélevée est trop importante, la partie en excès est ramenée vers la balle 9 par les dents de débourrage 23, la matière ainsi débourrée des dents de démêlage 15 étant dégagée des anneaux de débourrage 23 par les dents de dégagement 25 de la plaque de dégagement 24. Le produit démêlé tombe dans l'auge 28 et est aspiré par la turbine de distribution 26. On notera à ce propos que la disposition de la bande hélicoïdale 16 est telle que cette bande hélicoïdale 16 s'étend à partir d'une extrémité du tambour de démêlage la plus éloignée de l'orifice d'entrée 27 de la turbine 26 pour entraîner le produit démêlé vers l'orifice d'entrée 27 de la turbine 26 et faciliter ainsi l'aspiration du produit démêlé par la turbine 26 surtout dans les cas difficiles comme par exemple de la paille humide. Selon une disposition alternative, l'auge 28 peut être relevée par pivotement autour de l'axe 32 et le produit démêlé tombe alors directement sur le sol.

Pour éviter une accumulation de produit sous l'organe porteur 3 ou sous l'organe de démêlage 1O, la paroi inférieure du caisson 1 comporte de préférence des parties incurvées 33 qui épousent partiellement le contour de l'organe de démêlage 10 et de l'organe porteur 3.

Si pour une raison quelconque un excès de matière provoque un blocage de l'organe porteur ou de l'organe de débourrage, les moteurs d'entraînement réversibles 7 et 21 de l'organe porteur et de l'organe de débourrage permettent d'inverser le sens de rotation de l'un de ces organes tout en continuant à entraîner l'organe de démêlage 10 dans le sens habituel de sorte que la matière en excédant est aisément extraite.

Bien entendu l'invention n'est pas limitée au mode de réalisation décrit et on peut y apporter des variantes de réalisation sans sortir du cadre de l'invention.

En particulier, bien que l'invention ait été décrite en relation avec un mode de réalisation dans lequel les axes des organes du dispositif de démêlage s'étendent selon une direction longitudinale du tracteur, ce qui permet de diminuer le porte à faux du dispositif de démêlage et évite un cabrage du tracteur, le dispositif selon l'invention peut également être réalisé avec les axes de rotation des différents organes disposés selon un axe perpendiculaire à l'axe du tracteur.

De plus, on constatera que l'espace disponible sous la plaque de dégagement est assez important de sorte qu'un organe de distribution pourra être disposé selon la direction de déplacement de démêlage si cette solution est préférée à la solution du mode de réalisation illustré. Dans ce cas on pourra soit supprimer totalement la bande hélicoïdale 16 soit au contraire mettre deux tronçons de bandes hélicoïdales enroulées selon des pas inverses à partir des extrémités du tambour de démêlage afin de ramener la matière démêlée dans l'axe de l'organe de distribution.

## Revendications

1. Dispositif de démêlage de balles comprenant un caisson (1), un organe porteur de balles (3) disposé dans le caisson pour entraîner la balle (9) selon une direction de déplacement de démêlage de la balle dans le caisson, un organe de démêlage (1O) disposé en aval de l'organe porteur (3) par référence à la direction de déplacement de démêlage et associé à un organe d'entraînement en rotation (14), l'organe de démêlage (10) comportant un tambour de démêlage (11) monté pour tourner autour d'un axe (12) s'étendant perpendiculairement à la direction de déplacement de démêlage et des dents de démêlage (15) s'étendant en saillie par rapport au tambour de démêlage (11), et un organe de débourrage de dents (17) disposé en aval de l'organe de démêlage (1O) par référence à la direction de déplacement de démêlage et s'étendant partiellement entre les dents (15) de l'organe de démêlage (1O) caractérisé en ce que l'organe de débourrage (17) comporte un tambour de débourrage (18) monté pour tourner autour d'un axe (19) s'étendant parallèlement à l'axe de l'organe de démêlage, des anneaux de débourrage (22) fixés au tambour de débourrage (18) perpendiculairement à son axe et ayant un bord extérieur dentelé (23) s'étendant en saillie par rapport au tambour de débourrage (18), et une plaque de dégagement (24) disposée en surplomb par rapport au tambour de débourrage (18) et comportant des dents (25) engagées entre les anneaux de débourrage (22) jusqu'au voisinage du tambour de débourrage (18).

2. Dispositif de démêlage selon la revendication 1, caractérisé en ce que l'organe porteur (3) comporte un tambour porteur (4) monté pour tourner autour d'un axe (5) s'étendant parallèlement à l'axe du tambour de démêlage (11), et des organes d'entraînement (8) fixés au tambour porteur (4) et s'étendant en saillie par rapport à celui-ci.

3. Dispositif de démêlage selon la revendication 2, caractérisé en ce que les organes d'entraînement comprennent des barrettes (8) fixées au tambour porteur selon une direction parallèle à son axe.

4. Dispositif de démêlage selon l'une des revendications 1 à 3, caractérisé en ce que l'organe porteur (3) et l'organe de débourrage (17) sont associés à des moteurs d'entraînement réversibles.

5. Dispositif de démêlage selon l'une des revendications 1 à 4, caractérisé en ce qu'il comporte au moins une contre-lame (34) disposée en regard des dents (15) de l'organe de démêlage (1O) en aval de l'organe de débourrage (17) en référence à un sens de rotation de l'organe de démêlage (1O).

6. Dispositif de démêlage selon la revendication 5 caractérisé en ce que la contre-lame (34) est inclinée dans une direction favorisant l'écoulement d'un produit coupé.

7. Dispositif de démêlage selon l'une des revendications 1 à 6 comportant une turbine de distribution (26) ayant un orifice d'entrée (27) tourné vers l'intérieur du caisson et associé à une auge d'alimentation (28) s'étendant en regard de l'orifice d'entrée (27) de la turbine (26) parallèlement à l'axe de l'organe de démêlage (1O) pour recevoir un produit démêlé entraîné par l'organe de démêlage (1O) caractérisé en ce que l'organe de démêlage (1O) comporte une bande (16) fixée sur le tambour de démêlage (11) en saillie par rapport à celui-ci et enroulée de façon hélicoïdale sur une partie du tambour de démêlage à partir d'une extrémité la plus éloignée de l'orifice d'entrée (27) de la turbine (26) pour entraîner un produit démêlé vers l'orifice d'entrée (27) de la turbine (26).

8. Dispositif de démêlage selon l'une des revendications 1 à 7, caractérisé en ce que le caisson (1) a une paroi inférieure comportant des parties (33) épousant partiellement un contour de l'organe de démêlage (1O) et de l'organe porteur (3).

## Claims

1. Apparatus for breaking bales comprising a housing (1), a bale-carrier member (3) disposed in the housing to drive the bale (9) in a direction of breaking the bale in the housing, a bale-breaking member (10) disposed downstream of the carrier member (3) with reference to the direction of bale-breaking displacement and associated with a rotary drive member (14), the bale-breaking member (10) comprising a bale-breaking drum (11) which is mounted to rotate about an axis (12) extending perpendicularly to the direction of bale-breaking displacement and bale-breaking teeth (15) which extend in projecting relationship with respect to the bale-breaking drum (11), and a tooth-cleaning member (17) which is disposed downstream of the bale-breaking member (10) with reference to the direction of bale-breaking displacement and which extends partially between the teeth (15) of the bale-breaking member (10), characterised in that the cleaning member (17) comprises a cleaning drum (18) mounted to rotate about an axis (19) extending parallel to the axis of the bale-breaking member, cleaning rings (22) which are fixed to the cleaning drum (18) perpendicularly to its axis and having a serrated outside edge (23) extending in projecting relationship with respect to the cleaning drum (18), and a clearing plate (24) disposed in overhanging relationship with respect to the cleaning drum (18) and comprising teeth (25) engaged between the cleaning rings (22) to the vicinity of the cleaning drum (18).

2. A bale-breaking apparatus according to claim 1 characterised in that the carrier member (3) comprises a carrier drum (4) mounted to rotate about an axis (5) extending parallel to the axis of the bale-breaking drum (11), and drive members (8) which are fixed to the carrier drum (4) and which extend in projecting relationship with respect thereto.

3. A bale-breaking apparatus according to claim 2 characterised in that the drive members comprise bars (8) which are fixed to the carrier drum in a direction parallel to its axis.

4. A bale-breaking apparatus according to one of claims 1 to 3 characterised in that the carrier member (3) and the cleaning member (17) are associated with reversible drive motors.

5. A bale-breaking apparatus according to one of claims 1 to 4 characterised in that it comprises at least one counter-blade (34) disposed facing the teeth (15) of the bale-breaking member (10) downstream of the cleaning member (17) with reference to a direction of rotation of the bale-breaking member (10).

6. A bale-breaking apparatus according to claim 5 characterised in that the counter-blade (34) is inclined in a direction which promotes the discharge flow of a cut product.

7. A bale-breaking apparatus according to one of claims 1 to 6 comprising a distribution turbine (26) having an intake orifice (27) which is directed towards the interior of the housing and associated with a feed trough (28) extending facing the intake orifice (27) of the turbine (26) parallel to the axis of the bale-breaking member (10) to receive a product which has been removed fro the bale and entrained by the bale-breaking member (10) characterised in that the bale-breaking member (10) comprises a band (16) fixed on the bale-breaking drum (11) in projecting relationship with respect thereto and fund in a helicoidal configuration over a part of the bale-breaking drum from an end which is most remote from the intake orifice (27) of the turbine (26) to entrain the product which has been removed from the bale towards the intake orifice (27) of the turbine (26).

8. A bale-breaking apparatus according to one of claims 1 to 7 characterised in that the housing (1) has a lower wall comprising portions (33) which partially match a contour of the bale-breaking member (10) and the carrier member (3).

## Patentansprüche

1. Vorrichtung zum Aufbrechen von Ballen, umfassend ein Gehäuse (1), ein Ballenträgerorgan (3), das in dem Kasten angeordnet ist, um den Ballen (9) in dem Kasten gemäß einer Aufbrechbewegungsrichtung anzutreiben, ein Aufbrechorgan (10), das bezüglich der Aufbrechbewegungsrichtung stromabwärts des Trägerorgans (3) angeordnet und mit einem Antriebsorgan (14) verbunden ist, wobei das Aufbrechorgan (10) eine Aufbrechwalze (11), die um eine sich senkrecht zur Aufbrechbewegungsrichtung erstreckende Achse (12) drehbar gelagert ist, und Aufbrechzähne (15) hat, die sich in bezug auf die Aufbrechwalze (11) vorstehend erstrecken, und ein Ausputzorgan (17) für die Zähne, das bezüglich der Aufbrechbewegungsrichtung stromabwärts des Aufbrechorgans (10) angeordnet ist und sich teilweise zwischen die Zähne (15) des Aufbrechorgans (10) erstreckt, dadurch gekennzeichnet, daß das Ausputzorgan (17) eine Putzwalze (18), die drehbar um eine sich parallel zur Achse des Aufbrechorgans erstreckende Achse (19) gelagert ist, Putzringe (22), die senkrecht zur Achse der Putzwalze (18) an dieser befestigt sind und einen in bezug auf die Putzwalze (18) vorstehenden gezahnten Außenrand (23) haben, und eine Abstreifplatte (24) hat, die in bezug auf die Putzwalze (18) überstehend angeordnet ist und Zähne (25) hat, die bis in die Nähe der Putzwalze (18) zwischen die Putzringe (22) treten.

2. Aufbrechvorrichtung nach Anspruch 1, dadurch gekennzeichnet, daß das Trägerorgan (3) eine Trägerwalze (4), die drehbar um eine sich parallel zur Achse der Aufbrechwalze (11) erstreckende Achse (5) gelagert ist, und Mitnahmeelemente (8) hat, die an der Trägerwalze (4) befestigt sind und sich in bezug auf die Trägerwalze vorstehend erstrecken.

3. Aufbrechvorrichtung nach Anspruch 2, dadurch gekennzeichnet, daß die Mitnahmeelemente Stege (8) sind, die an der Trägerwalze gemäß einer zu deren Achse parallelen Richtung befestigt sind.

4. Aufbrechvorrichtung nach einem der Ansprüche 1 bis 3, dadurch gekennzeichnet, daß das Trägerorgan (3) und das Ausputzorgan (17) mit reversierbaren Antriebsmotoren verbunden sind.

5. Aufbrechvorrichtung nach einem der Ansprüche 1 bis 4, gekennzeichnet durch wenigstens ein Gegenmesser (34), das bezüglich einer Drehrichtung des Aufbrechorgans (10) den Zähnen (15) des Aufbrechorgans (10) gegenüberstehend stromabwärts des Ausputzorgans (17) angeordnet ist.

6. Aufbrechvorrichtung nach Anspruch 5, dadurch gekennzeichnet, daß das Gegenmesser (34) in eine Richtung geneigt ist, in welche der Fluß zerkleinerten Gutes begünstigt wird.

7. Aufbrechvorrichtung nach einem der Ansprüche 1 bis 6, umfassend eine Verteilerturbine (26) mit einer Einlaßöffnung (27), die dem Inneren des Kastens zugekehrt und mit einer Speisemulde (28) verbunden ist, die sich der Einlaßöffnung (27) der Turbine (26) gegenüberstehend parallel zur Achse des Aufbrechorgans (10) erstreckt, um aufgebrochenes Gut aufzunehmen, das durch das Aufbrechorgan (10) mitgenommen wird, dadurch gekennzeichnet, daß das Aufbrechorgan (10) einen bandförmigen Steg (16) umfaßt, der von der Aufbrechwalze (11) abstehend an derselben befestigt ist und ausgehend von dem von der Einlaßöffnung (27) der Turbine (26) am weitest entfernten Ende schraubenförmig um einen Teil der Aufbrechwalze herumgewunden ist, um zerkleinertes Gut in Richtung auf die Einlaßöffnung (27) der Turbine (26) zu treiben.

8. Aufbrechvorrichtung nach einem der Ansprüche 1 bis 7, dadurch gekennzeichnet, daß der Kasten (1) eine untere Wand mit Bereichen (33) hat, die sich teilweise an die Kontur des Aufbrechorgans und des Trägerorgans (3) anschmiegen.
